# FASCICULE DE BREVET EUROPEEN

(11) **EP 1 202 506 B1**
(45) Date de publication et mention de la délivrance du brevet: **23.01.2008**
(21) Numéro de dépôt: 01402626.4
(22) Date de dépôt: 11.10.2001
(51) Int. Cl.: H04L 12/56

(54) **Procédé pour informer de la capacité de traitement spécifique d'un noeud d'un réseau de télécommunication**
Verfahren für das Informieren über die spezifische Datenbehandlungkapazität eines Fernmeldenetzknotenpunktes
A method for informing of the specific data handling capacity of a telecommunications network node

(30) Priorité: 23.10.2000 FR 0013513
(43) Date de publication de la demande: 02.05.2002
(73) Titulaire: Alcatel Lucent, 75008 Paris (FR)
(72) Inventeur: Galand, Damien, 92370 Chaville (FR); Marce, Olivier, 91300 Massy (FR)
(74) Mandataire: Sciaux, Edmond

(56) Documents cités:
- WO-A-00/42746
- US-A- 5 631 897
- "Request for Comments 2370 : The OSPF Opaque LSA Option" THE INTERNET SOCIETY, 1998, XP002172207

## Description

La présente invention est relative aux réseaux de télécommunication dont les noeuds sont capables de traiter de façon spécifique, les messages d'information qu'ils reçoivent.

L'invention s'applique particulièrement aux réseaux actifs. Ce concept de réseau actif a été introduit par les travaux du DARPA en 1994 et ont fait l'objet d'une première conférence internationale, IWAN 99 (*international Workshop on Active* Networks). le concept est ainsi divulgué dans "The Impact of Active Networking Technology on Service Management in a Telecom Environment " BRUNNER and to, TIK -Report, No 55, Aout 1998.

Selon ces travaux, un réseau actif est un réseau dans lequel les noeuds, ou certains d'entre eux, sont capables de traiter d'une façon spécifique, les messages véhiculés par le réseau. Autrement dit, cela signifie que ces noeuds doivent être capables de dérouler un algorithme autre que ceux qu'ils connaissaient lors de leur conception.

Au sein d'un réseau actif, tous les noeuds ne sont pas obligatoirement pourvus de cette capacité de traitement : on distingue donc des noeuds actifs de noeuds non actifs (c'est-à-dire normaux).

Le traitement qu'un noeud actif peut mettre en oeuvre peut être de différente nature :
- Il peut s'agir d'exécuter les données contenues dans le message reçu. Ces données sont alors du code exécutable.
- Ou bien, il peut s'agir d'aller récupérer un code exécutable quelque part sur le réseau, en fonction des données reçues.

Ce traitement peut être relatif à au moins deux différents niveaux de la couche de protocoles de communication mis en oeuvre par le réseau :

À un niveau application, il peut s'agir de décoder et modifier la charge utile du message reçu.

À un niveau routage, il peut s'agir de prendre des décisions de routage en fonction du résultat de ce traitement. Autrement dit, un message peut contenir des informations, ou même l'algorithme lui-même, servant à le router.

Ces décisions peuvent toutefois aussi dépendre de l'environnement. Par exemple, dans la mesure où les noeuds du réseau peuvent être actifs ou non actifs, l'algorithme de routage mis en oeuvre par un noeud actif donné pourrait prendre en compte ceci pour décider vers où router le message reçu. Notamment, il pourrait être intéressant de router un message en priorité vers un noeud actif plutôt que vers un noeud normal (c'est-à-dire non actif) qui ne sera pas forcément à même de le traiter correctement.

Le document US 5 631 897 décrit un procédé pour véhiculer des informations de routage, c'est-à-dire des informations qui vont permettre aux routeurs d'aiguiller correctement des paquets de données. Ces informations de routage peuvent, par exemple, être émises de façon périodique, dans des messages de routage. Ces informations de routage portent sur les caractéristiques des liaisons entre les noeuds, mais elles n'indiquent rien sur la capacité des noeuds à être actifs, ou non. Par conséquent, les messages sont routés indépendamment de cette capacité.

La présente invention a pour but d'améliorer l'efficacité du routage en permettant un routage qui soit fonction de la capacité des noeuds à être actifs, ou non.

Pour ce faire l'invention a pour objet un procédé de routage dans un réseau de télécommunication comportant au moins un noeud dit actif, c'est à dire capable de dérouler un algorithme autre que ceux qu'ils connaissait lors de sa conception, cet algorithme consistant étant déroulé en exécutant du code exécutable contenu dans un message reçu par ce noeud via ledit réseau, ou du code exécutable récupéré, par ce noeud actif, dans ledit réseau ;
consistant à émettre de façon périodique des messages de routage depuis un noeud vers des noeuds voisins de ce noeud dans ledit réseau de télécommunication ;
et étant caractérisé en ce qu'il consiste en outre à insérer dans des messages de routage émis par un noeud actif, des informations relatives à la capacité de ce noeud à dérouler un algorithme autre que ceux qu'ils connaissait lors de sa conception.

L'invention a pour autre objet un noeud actif pour réseau de télécommunication, ce noeud étant capable de dérouler un algorithme autre que ceux qu'ils connaissait lors de sa conception, cet algorithme consistant étant déroulé en exécutant du code exécutable contenu dans un message reçu par ce noeud via un réseau de télécommunication, ou du code exécutable récupéré, par ce noeud, dans un réseau de télécommunication ;
ce noeud actif comportant des moyens pour émettre de façon périodique des messages de routage vers des noeuds voisins de ce noeud dans un réseau de télécommunication ;
et étant caractérisé en ce qu'il comporte en outre des moyens pour insérer, dans des messages de routage émis par ce noeud actif, des informations relatives à la capacité dudit noeud à dérouler un algorithme autre que ceux qu'ils connaissait lors de sa conception.

Ainsi, par le biais du protocole de routage, chaque noeud a la connaissance des capacités de chaque autre noeud de son environnement de pouvoir traiter des messages. Autrement dit, chaque noeud est capable de déterminer si un noeud de son environnement est un noeud actif ou un noeud normal.

L'invention et ses avantages apparaîtront de façon plus claire dans la description qui va suivre, en liaison avec les figures jointes.
La figure 1 illustre un paquet de routage conforme à une mise en oeuvre de l'invention.
La figure 2 illustre un paquet de routage conforme à une deuxième mise en oeuvre de l'invention.

Cette technologie des réseaux actifs s'applique particulièrement bien aux réseaux de type Internet, c'est à dire basés sur un protocole de communication de type IP (*Internet Protocol*). Dans ce contexte, les noeuds sont appelés routeurs, et donc les noeuds actifs sont des routeurs actifs.

Dans le cadre d'un réseau Internet, le protocole de routage est, dans la majeure partie des cas, conforme au standard OSPF (*Open Shortest Path First*) tel que décrit dans le RFC 2328 de l'IETF (*Internet Engineering Task Force*).

Selon ce standard, les routeurs s'informent régulièrement de leurs états par l'échange de messages ODPF. En fonction de la valeur d'un champ « type », ces messages OSPF peuvent contenir différents types de messages. Parmi ces types de messages, on peut citer les messages dits « hello », et les messages de mise à jour d'état de connexion *(Link State Update*).

Les messages « hello » ont pour but d'informer les voisins d'un routeur de l'état de celui-ci. Ces messages « hello » sont transmis à intervalle régulier, de sorte que si un routeur ne reçoit pas de messages « hello » d'un autre routeur pendant un intervalle sensiblement supérieur, il peut en déduire que ce dernier est hors service, et peut prendre les dispositions ad-hoc (par exemple, modifier ses tables de routage).

Les messages « *Link State Update »* ont typiquement pour but de mettre à jour les tables de routage que chaque routeur du réseau possède. En effet, chaque routeur ne peut avoir initialement la connaissance de la topologie de l'ensemble du réseau ou du sous-réseau auquel il appartient. Aussi, le rôle des messages *« Link State Update »* est de leur permettre d'échanger des informations afin que les routeurs puissent acquérir la connaissance de la topologie de ce réseau. Cette connaissance peut alors être utilisée par les routeurs pour construire sa propre table de routage, qu'il peut alors utiliser pour router les messages qu'il reçoit.

Les messages « *LSA* Update » peuvent contenir une ou plusieurs unité d'information appelée « Link State Adverstisement » (LSA). Un LSA contient de l'information sur une connexion entre le routeur et un de ses voisins.

Le RFC (*Request For Comments*) 2370 de l'IETF a introduit la notion de LSA opaque (*Opaque LSA,* en langue anglaise), dans un but d'ouverture du protocole OSPF. Ces LSA opaques sont destinés à véhiculer de l'information spécifique à des applications mises en oeuvre par les routeurs.

Un message LSA opaque se compose de deux parties :
- Un entête,
- Un corps de message, contenant des informations spécifiques à l'application concernée par le message.

Selon une mise en oeuvre préférentielle de l'invention, on utilise ces messages LSA opaques pour transmettre des informations relatives à la capacité d'un noeud de traiter les messages d'information de façon spécifique.

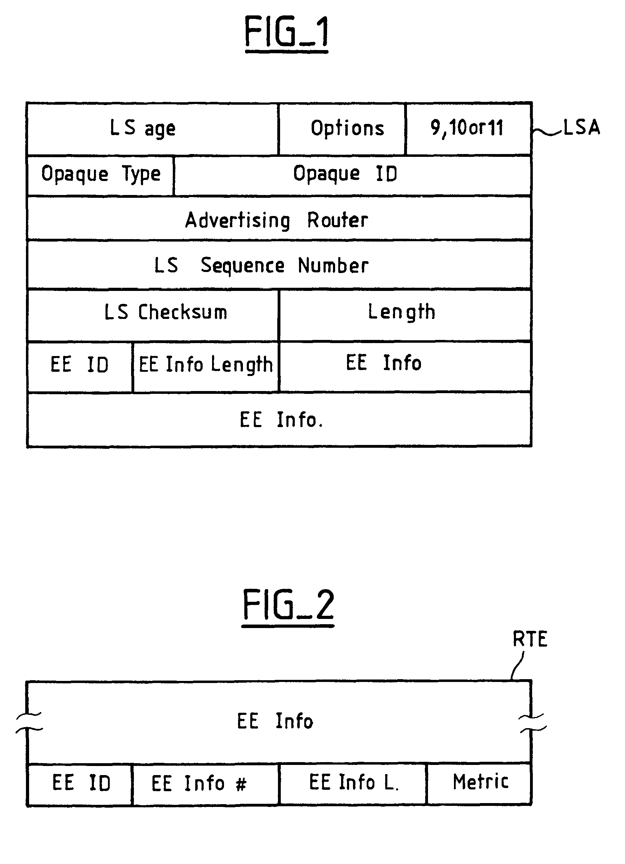

La figure 1 schématise la structure d'un message LSA opaque conformément au RFC 2370. Les champs « LS age », « Options », « 9, 10 or 11 », « Advertising Router », « LS Sequence Number », « LS checksum » et « Lenght » correspondent aux spécifications des messages LSA et ne seront donc pas détaillées ici.

Les champs « Opaque Type » et « Opaque ID » sont spécifiques aux messages LSA opaque.

Le premier champ, « Opaque Type » permet de signaler que le message LSA en question est un message LSA opaque contenant des informations relatives à la capacité du routeur émetteur (identifié par le champ « Advertising Router ») de traitement spécifique des messages d'information.

La valeur que doit prendre ce champ est indifférente du moment que tout les routeurs appartenant au réseau ou au sous réseau la connaissent. Dans le cadre du réseau Internet mondial, la charge de fixer cette valeur revient actuellement à l'IANA (*Internet Assigned Number Authority*) au sujet de laquelle on peut trouver des informations sur le site internet http://www.iana.org.

Le champ suivant, « Opaque ID » permet de préciser plus précisément la caractéristique concernant ce traitement spécifique que l'on veut indiquer. En effet, en plus de préciser que le routeur en question est capable d'effectuer un traitement spécifique des messages d'information reçus, il peut être souhaitable de préciser quel types de traitement il peut mettre en oeuvre, dans quelles mesures et suivant quelles contraintes etc.

Un exemple d'une telle caractéristique est l'environnement d'exécution. On peut donc par exemple choisir que la valeur 0 (zéro) dans le champ « Opaque ID » signifie que la caractéristique précisée par le message LSA opaque est l'environnement d'exécution.

Les informations relatives à la caractéristique « environnement d'exécution » peuvent être insérées dans le corps du message, c'est-à-dire à la suite de l'entête définie par le protocole OSPF.

Selon une mise en oeuvre de l'invention, ce corps de message C peut être subdivisé en plusieurs champs.

Le champ « EE ID » indique un identificateur unique de l'environnement d'exécution. Cet identificateur unique peut être enregistré auprès d'une instance officielle. Une telle instance peut par exemple être l'ANANA *(Active Network Assigned Number Authority).*

Typiquement, cet identificateur détermine de façon univoque l'environnement d'exécution du routeur en question. Cet environnement d'exécution comprend le système d'exploitation qu'il met en oeuvre, mais aussi d'éventuelles spécificités. Par exemple, ce système d'exploitation peut être une machine Java. Auquel cas il est important de préciser la version de la machine virtuelle, son fournisseur etc. dans la mesure où il peut exister des problèmes de compatibilité d'une machine virtuelle à une autre.

Il est aussi à noter qu'un même routeur peut mettre en oeuvre plusieurs environnements d'exécution distincts.

Le champ suivant, référencé « EE Info Length » sur la figure 1, représente la longueur du champ suivant. Cette longueur peut par exemple être exprimée en nombre de mots de 32 bits.

On peut, par convention, décider que la valeur 0 signifie que le champ suivant à une longueur limitée aux 16 bits permettant de finaliser l'alignement sur 32 bits

Le champ suivant, « EE Info » permet l'insertion d'informations supplémentaires concernant l'environnement d'exécution.

À titre d'exemples non exhaustifs, on peut insérer dans ce champ une liste de modules logiciels (ou librairies) disponibles sur ce serveur, des informations relatives à des droits d'accès etc.

La figure 2 illustre une deuxième mise en oeuvre de l'invention. En effet, l'invention est susceptible de s'appliquer à tout type de protocoles autres que OSPF, et notamment au protocole RIPng. Ce protocole est par exemple spécifié dans le RFC 2080, intitulé « RIPng for IPv6 ».

Un message RIPng comporte une ou plusieurs entrées de table de routage RTE (*Route Table Entry*). La figure 2 représente une de ces entrées.

Selon cette mise en oeuvre, le dernier champ, référencé « *metric* » est utilisé pour préciser la nature de l'entrée. Il joue un rôle similaire à celui du champ « *Opaque Type »* dans la mise en oeuvre avec OSPF. De la même façon, sa valeur est à préciser par un organisme tel l'IANA.

Si le champ « metric » contient cette valeur la sémantique des champs de l'entrée est modifiée pour contenir des informations concernant les capacités actives du routeur.

Les champs « EE info » et « EE ID » sont similaires à ceux décrits dans la première mise en oeuvre avec OSPF.

Le champ « EE Info # » permet de signifier que l'information relative à l'environnement d'exécution (contenue dans le champ « EE Info ») ne peut être incluse dans un seul message RIPng. Sa valeur peut donc être le nombre de messages RIPng consécutif contenant des informations relatives au même environnement d'exécution.

Enfin, le champ « EE Info L. » permet de préciser la taille de la donnée utile dans le champ « EE Info ».

## Revendications

1. Procédé de routage dans un réseau de télécommunication comportant au moins un noeud dit actif, c'est à dire capable de dérouler un algorithme autre que ceux qu'ils connaissait lors de sa conception, cet algorithme étant déroulé en exécutant du code exécutable contenu dans un message reçu par ce noeud via ledit réseau, ou du code exécutable récupéré, par ce noeud actif, dans ledit réseau ; le procédé consistant à émettre de façon périodique des messages de routage (LSA) depuis un noeud vers des noeuds voisins de ce noeud dans ledit réseau de télécommunication ;
**caractérisé en ce qu'**il consiste en outre à insérer dans des messages de routage (LSA) émis par un noeud actif, des informations (EE ID, EE Info) relatives à la capacité de ce noeud à dérouler un algorithme autre que ceux qu'ils connaissait lors de sa conception.

2. Procédé selon la revendication précédente, dans lequel le noeud actif considéré est un routeur, et dans lequel les informations relatives à ladite capacité comprennent des informations concernant l'environnement d'exécution dudit routeur.

3. Procédé selon la revendication 2, dans lequel lesdits messages de routage sont des messages LSA opaques conformes au protocole OSPF.

4. Procédé selon la revendication précédente, dans lequel les informations relatives à ladite capacité sont insérées dans les champs « Opaque Type », « Opaque ID » et éventuellement dans le corps du message.

5. Procédé selon la revendication 4, dans lequel le champ « Opaque ID » indique que des informations concernant l'environnement dudit routeur sont contenues dans ledit corps du message.

6. Procédé selon la revendication 1, dans lequel lesdits messages de routage sont conformes au protocole RIPng.

7. Procédé selon la revendication précédente, dans lequel les informations relatives à ladite capacité sont insérées dans des entrées de tables de routage (RTE).

8. Noeud actif pour réseau de télécommunication, ce noeud étant capable de dérouler un algorithme autre que ceux qu'ils connaissait lors de sa conception, cet algorithme étant déroulé en exécutant du code exécutable contenu dans un message reçu par ce noeud via un réseau de télécommunication, ou du code exécutable récupéré, par ce noeud, dans un réseau de télécommunication ;
ce noeud actif comportant des moyens pour émettre de façon périodique des messages de routage (LSA) vers des noeuds voisins de ce noeud dans un réseau de télécommunication ;
**caractérisé en ce qu'**il comporte en outre des moyens pour insérer, dans des messages de routage (LSA) émis par ce noeud actif, des informations (EE ID, EE Info) relatives à la capacité dudit noeud à dérouler un algorithme autre que ceux qu'ils connaissait lors de sa conception.

9. Noeud de réseau selon la revendication précédente, qui est un routeur et dans lequel les informations relatives à ladite capacité comprennent des informations concernant l'environnement d'exécution dudit routeur.

10. Noeud de réseau selon la revendication 8, dans lequel lesdits messages de routage sont des messages LSA opaques conformes au protocole OSPF.

11. Noeud de réseau selon la revendication précédente, dans lequel les informations relatives à ladite capacité sont insérées dans les champs « Opaque Type », « Opaque ID » et éventuellement dans le corps du message.

## Claims

1. A method of routing within a telecommunications network comprising at least one node that is active, i.e. capable of running an algorithm other than those designed into it, this algorithm being run by executing executable code contained in a message received by said node via said network, or executable code recovered, by said active node, from within said network; the method consisting in periodically sending routing messages (LSA) from one node to its neighboring nodes within said telecommunications network; and
being **characterized in that** it further consists in inserting within the routing messages (LSA) sent by an active node, information (EE ID, EE Info) relating to the capacity of said node to run an algorithm other than those designed into it.

2. A method according to the preceding claim, wherein the active node under consideration is a router, and wherein the information relating to said capacity includes information concerning the execution environment of said router.

3. A method according to claim 2, wherein said routing messages are opaque LSA messages conforming to the OSPF protocol.

4. A method according to the preceding claim, wherein the information relating to said capacity is inserted into "Opaque Type" and "Opaque ID" fields of the message and possibly into the body of the message.

5. A method according to claim 4, wherein the "Opaque ID" field indicates that information concerning the environment of said router is contained in said body of the message.

6. A method according to claim 1, wherein said routing messages conform to the RIPng protocol.

7. A method according to the preceding claim, wherein the information relating to said capacity is inserted in Route Table Entries (RTE).

8. An active node for telecommunications network, said node being capable of running an algorithm other than those designed into it, this algorithm being run by executing executable code contained in a message received by said node via a telecommunications network, or executable code recovered, by said node, from within a telecommunications network;
this active node comprising means for periodically sending routing messages (LSA) to its neighboring nodes within a telecommunications network; and
being **characterized in that** it further comprises means for inserting, within routing messages (LSA) sent by said active node, information (EE ID, EE Info) relating to the capacity of said node to run an algorithm other than those designed into it.

9. A network node according to the preceding claim, which is a router and wherein the information relating to said capacity includes information concerning the execution environment of said router.

10. A network node according to either claim 8, wherein said routing messages are opaque LSA messages conforming to the OSPF protocol.

11. A network node according to the preceding claim, wherein the information relating to said capacity is inserted in "Opaque Type" and "Opaque ID" fields of the message and possibly into the body of the message.

## Patentansprüche

1. Routing-Verfahren in einem Fernmeldenetz, welches mindestens einen so genannten aktiven Knotenpunkt einschließt, das heißt einen Knotenpunkt, der im Stande ist, einen anderen Algorithmus als diejenigen, die er bei seiner Konzeption kannte, abzuwickeln, wobei dieser Algorithmus **dadurch** abgewickelt wird, dass ausführbarer Code ausgeführt wird, der in einer Meldung enthalten ist, die von diesem Knotenpunkt via dieses Netz empfangen wird, oder zurück gewonnener Code durch diesen aktiven Knotenpunkt in diesem Netz;
wobei das Verfahren darin besteht, periodisch Routing-Meldungen (LSA) von einem Knotenpunkt aus an benachbarte Knotenpunkte dieses Knotenpunktes in diesem Fernmeldenetz zu senden;
**dadurch gekennzeichnet, dass** es außerdem darin besteht, in Routing-Meldungen (LSA), die von einem aktiven Knotenpunkt gesendet werden, Informationen (EE ID, EE Info) einzufügen, die sich auf die Kapazität dieses Knotenpunktes beziehen, einen anderen Algorithmus als diejenigen, die er bei seiner Konzeption kannte, abzuwickeln.

2. Verfahren gemäß dem vorstehenden Anspruch, bei dem der betrachtete aktive Knotenpunkt ein Router ist, und bei dem die Informationen bezüglich dieser Kapazität Informationen betreffend die Ausführungsumgebung dieses Routers einschließen.

3. Verfahren gemäß Anspruch 2, bei dem diese Routing-Meldungen opake LSA-Meldungen gemäß dem OSPF-Protokoll sind.

4. Verfahren gemäß dem vorstehenden Anspruch, bei dem die Informationen bezüglich dieser Kapazität in die Felder "Opaque Type", "Opaque ID" und eventuell in den Hauptteil der Meldung eingefügt werden.

5. Verfahren gemäß Anspruch 4, bei dem das Feld "Opaque ID" angibt, dass Informationen betreffend die Umgebung dieses Routers in diesem Hauptteil der Meldung enthalten sind.

6. Verfahren gemäß Anspruch 1, bei dem diese Routing-Meldungen dem RIPng-Protokoll entsprechen.

7. Verfahren gemäß dem vorstehenden Anspruch, bei dem die Informationen bezüglich dieser Kapazität in Eingaben von Routing-Tabellen (RTE) eingefügt werden.

8. Aktiver Knotenpunkt für Fernmeldenetz, wobei dieser Knotenpunkt in der Lage ist, einen anderen Algorithmus abzuwickeln, als diejenigen, die er bei seiner Konzeption kannte, wobei dieser Algorithmus **dadurch** abgewickelt wird, dass ausführbarer Code ausgeführt wird, der in einer Meldung enthalten ist, welche von diesem Knotenpunkt via ein Fernmeldenetz empfangen wird, oder zurück gewonnener ausführbarer Code durch diesen Knotenpunkt in einem Fernmeldenetz;
wobei dieser aktive Knotenpunkt Mittel enthält, um periodisch Routing-Meldungen (LSA) an benachbarte Knotenpunkte dieses Knotenpunkts in einem Fernmeldenetz zu senden;
und **dadurch gekennzeichnet, dass** es außerdem Mittel einschließt, um in Routing-Meldungen (LSA), die von diesem aktiven Knotenpunkt gesendet werden, Informationen (EE ID, II Info) einzufügen betreffend die Kapazität dieses Knotens hinsichtlich der Abwicklung eines anderen Algorithmus als diejenigen, die er bei seiner Konzeption kannte.

9. Netzknotenpunkt gemäß dem vorstehenden Anspruch, der ein Router ist und bei dem die Informationen bezüglich dieser Kapazität Informationen einschließen, die die Ausführungsumgebung dieses Routers betreffen.

10. Netzknotenpunkt gemäß Anspruch 8, bei dem diese Routing-Meldungen opake LSA-Meldungen gemäß dem OSPF-Protokoll sind.

11. Netzknotenpunkt gemäß dem vorstehenden Anspruch, bei dem die Informationen bezüglich dieser Kapazität in die Felder "Opaque Type", "Opaque ID" und eventuell in den Hauptteil der Meldung eingefügt werden.
